# EUROPEAN PATENT APPLICATION

(11) **EP 4 852 141 A1**
(43) Date of publication of application: **09.12.2026**
(21) Application number: 25181443.0
(22) Date of filing: 06.06.2025
(51) Int. Cl.: H01M 10/613, H01M 10/6554, H01M 50/209, H01M 50/249, H01M 50/264, H01M 50/507, H01M 50/55

(54) **BATTERY PACK WITH TEXTILE STACK HOLDER**

(71) Applicant: SAMSUNG SDI CO., LTD., Yongin-si, Gyeonggi-do 17084 (KR)
(72) Inventor: Maresch, Dominik, 8071 Hausmannstaetten (AT); Fuerpass, Anton, 8552 Eibiswald (AT)
(74) Representative: Gulde & Partner

(57) **Abstract**

The present disclosure refers to a battery pack including a cell stack with terminals aligned to its top side, housed within a mounting space that includes a floor and opposing side walls. A stack holder, made of textile material, is fixed to the side walls and extends over the top side of the cell stack. The stack holder is tensioned to press the cell stack against the floor of the mounting space.

## Description

### Field of the Disclosure

Embodiments of the present disclosure relate to a battery pack with a textile stack holder.

### Technological Background

Recently, vehicles for transportation of goods and peoples have been developed that use electric power as a source of motion. Such an electric vehicle is an automobile that is propelled either permanently or temporarily by an electric motor using energy stored in rechargeable batteries. An electric vehicle may be solely powered by batteries (known as a Battery Electric Vehicle, BEV) or may include a combination of an electric motor and, for example, a conventional combustion engine (known as a Plug-in Hybrid Electric Vehicle, PHEV). Both BEVs and PHEVs use high-capacity rechargeable batteries designed to provide power for propulsion over sustained periods of time.

Generally, a rechargeable (or secondary) battery cell includes an electrode assembly including a positive electrode, a negative electrode, and a separator interposed those electrodes. A solid or liquid electrolyte enables movement of ions during the charging and discharging of the battery cell. The electrode assembly is located in a casing, and electrode terminals, which are positioned on the outside of the casing, establish an electrically conductive connection to the electrodes. Common battery cell formats include, for example, cylindrical, prismatic, and pouch.

A battery module is formed of a plurality of battery cells connected together in series or parallel. That is, the battery module is formed by interconnecting the electrode terminals of the plurality of battery cells, depending on a desired amount of power and in order to realize a relatively high-power rechargeable battery.

Battery modules can be constructed either in a block design or in a modular design. In the block design each battery cell is coupled to a common current collector structure and a common cell management unit and accommodated in a housing. In the modular design, several battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or individual battery cells. The battery modules and/or battery cells may be configured in a series, parallel or a combination of both to deliver the desired voltage, capacity, and/or power density. Components of a battery pack include the individual battery modules, and interconnects, which provide electrical conductivity between the battery modules.

In electric vehicles, the Cell Contacting System (CCS) or cell contacting unit (CCU) represents the initial stage of electrical power transmission between the battery cell and consumers or power sources. The number of battery cells in electric vehicles typically ranges from a few hundred to a few thousand. A fully charged lithium-ion single cell typically exhibits a maximum voltage of 4.2 V, with the capacity enabling the delivery of currents in the range of a few amperes up to several 100 amperes. Battery systems for passenger cars operate with voltages between 400 V and 800 V and must be capable of delivering currents of up to 500 A or even more. In order to achieve the requisite voltage and current levels, individual battery cells are connected in parallel and in series.

Therefore, the battery cells are grouped into several functional blocks, which are then connected electrically to form the overall battery system. The aforementioned blocks are then reinforced within a housing structure and are collectively referred to as a battery module. While the battery modules are typically connected in series, the battery cells within the modules are connected in both parallel and series. In the case of cylindrical battery cells, which are relatively small, a number of cells are connected in parallel. In the case of larger battery cells, it is not uncommon for only two to be connected in parallel, or for there to be a pure series connection. It is precisely this electrical interconnection of the battery cells at the module level that the CCS assumes. Consequently, these are available in a multitude of designs and geometries, for example adapted to the respective battery module.

In electric vehicles, the Cell Contacting System (CCS) represents the initial stage of electrical power transmission between the battery cell and consumers or power sources. The number of battery cells in electric vehicles typically ranges from a few hundred to a few thousand. A fully charged lithium-ion single cell typically exhibits a maximum voltage of 4.2 V, with the capacity enabling the delivery of currents in the range of a few amperes up to several hundred amperes. Battery systems for passenger cars operate with voltages between 400 V and 800 V and must be capable of delivering currents of up to 500 A or more. In order to achieve the requisite voltage and current levels, individual battery cells are connected in parallel and in series.

Therefore, the battery cells are grouped into several functional blocks, which are then connected electrically to form the overall battery system. The aforementioned blocks are reinforced within a housing structure and are collectively referred to as a battery module. While the battery modules are typically connected in series, the battery cells within the modules are connected in both parallel and series. In the case of cylindrical battery cells, which are relatively small, a number of cells are connected in parallel. For larger battery cells, it is not uncommon for only two to be connected in parallel, or for there to be a pure series connection. It is precisely this electrical interconnection of the battery cells at the module level that the CCS assumes. Consequently, the CCS is available in a multitude of designs and geometries, for example adapted to the respective battery module.

In addition to the electrical interconnection of the individual battery cells, the CCS is also responsible for implementing and integrating other functions. These primarily include potential points for voltage monitoring and temperature-dependent resistors (thermistors) for temperature measurement at critical points. Furthermore, it is essential to ensure that the aforementioned signals are conveyed to the battery management system (BMS) at the module level. This system is also known as the cell monitoring unit (CMU) or BMS slave. The additional functions allow for further expansion of the options for the structure, geometry, and materials of the CCS.

To fulfill its function, the CCS must be capable of compensating for the tolerances that arise between individual battery cells during the assembly process. Furthermore, it must be able to maintain the lowest possible resistance with the battery cells over the entire life cycle. The CCS is exposed to vibrations and shocks during operation, as well as to changes in the dimensions of the battery cell resulting from the charging and discharging processes. Additionally, temperature variations within the system give rise to additional mechanical stress due to differing expansion rates. In the event of an alteration or failure in the interconnection between the battery cells, this will result in the emergence of undefined conditions within the battery system. Consequently, individual battery cells may become either undercharged or overcharged due to a change in resistance, or they may become completely decoupled. This places an increased burden on the remaining battery cells, which in turn leads to accelerated ageing and an increased safety risk. Furthermore, there is a risk of the system failing or becoming impaired in its functionality. For this reason, the CCS plays a crucial role in ensuring quality and safety within the battery system. In essence, the CCS can be distinguished by the design and selection of materials used in the construction of its individual components, as well as the manner in which individual components are integrated into a comprehensive CCS system. Moreover, there are notable differences in the design of the CCS for various battery cell formats, including cylindrical, prismatic, and pouch. It is not the case that any single design is suitable for all possible cell formats.

A fundamental component of the CCS, that facilitates the electrical connection between individual battery cells, is a stamped, folded, and occasionally laser-cut sheet metal element, which is henceforth referred to as a busbar. The materials commonly used include nickel-plated copper, coated aluminum and steel. The busbar can be positioned directly on the battery cells as an individual part or initially mounted in a plastic frame, which subsequently contains all the connectors for an entire battery module. Furthermore, the plastic frame can accommodate the conductor tracks or cables of the sensors or the entire printed circuit board (PCB) of the CMU, which is responsible for converting the analogue sensor values into digital ones and transmitting them to the central BMS (the BMS-master). This integration significantly reduces the time and effort required for mounting the CCS during module production. Moreover, the potential connections can be partially replaced by direct connections of the busbars to the BMS slaves. Another method for integrating the individual components is the production of a laminated CCS. In this case, the aforementioned components are laminated into a multi-layer structure including composite foils or attached to a carrier foil. Additionally, flat plastic components can be used to reinforce the composite structure. Furthermore, this approach results in a notable reduction in the effort required for module assembly, as only a single component needs to be placed and connected.

The sensors incorporated into the CCS are connected to the CMU either in a cable configuration or as a flexible printed circuit (FPC). In the cable configuration, each potential tap or thermistor is provided with an individual cable. These are typically mounted in a complex manner, either within the CCS or as part of the module assembly process, and connected to the CMU. In contrast, the use of an FPC enables the creation of a single component that incorporates the various sensors and cables, and which is then connected to the CMU via a connector. Regarding the sensor, it is either connected directly to the cell terminal or attached to the busbar, achieved through the processes of welding or bonding. The version with cables is either mounted directly during the module production process or connected to a carrier frame in the production of the CCS. The use of FPCs streamlines the integration of the connections into the CCS, resulting in a more efficient and integrated component.

In prismatic battery cells, it is standard practice to connect only a small number of cells in parallel. The contacts are located on the upper surface or end faces of the battery cells. It is important to consider the potential for expansion during charging and vibrations during operation, as these cells are not firmly encapsulated and, due to their design, larger volume changes can occur during charging. Therefore, it is important to ensure tolerance compensation in the busbars, which is achieved through the use of a curved bridge in the connectors. Currently, the CCS for prismatic cells is typically pre-assembled in a plastic frame and attached to the pre-tensioned battery module during module assembly. However, there is an increasing use of laminated CCS.

Mechanical integration of a battery pack is achieved by appropriate mechanical connections between the individual components, for example, between the battery modules, and between them and a supporting structure of the vehicle. These connections should remain functional and save during the average service life of the battery system. Further, installation space and interchangeability specifications should be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

A conventional battery system, despite any modular structure, usually includes a battery housing that acts as an enclosure to seal the battery system against the environment and provides structural protection of the battery system's components. Housed battery systems are usually mounted as a whole into their application environment, for example an electric vehicle. Thus, the replacement of defective system parts, for example, a defective battery submodule, requires dismounting the entire battery system and removal of its housing first. Even defects of small and/or cheap system parts might then lead to dismounting and replacement of the complete battery system and its separate repair. Because high-capacity battery systems are expensive, large and heavy, the procedure is burdensome and the storage, for example, in the mechanic's workshop, of the bulky battery system is difficult.

As the location for the active and passive components of a battery system, the battery housing plays a decisive role in the functionality, safety and service life of the energy storage system. It protects the sensitive components from harmful environmental influences such as water, moisture and dust and is therefore crucial for long-term safe and reliable operation. As traction batteries are typically located outside the vehicle cabin, usually in the floor area, the housing is directly exposed to extreme environmental conditions such as temperature, humidity, splash water, salt spray, dust and stone chipping. High mechanical stability and corrosion resistance are therefore essential, even under aggressive external conditions. In addition to the environmental influences, which mainly affect the surface of the housing or the tightness of the housing, the internal and external fastening systems are of particular importance under vehicle operating conditions.

### Summary of Invention

The invention is defined by the appended claims. The description that follows is subjected to this limitation. Any disclosure lying outside the scope of the claims is only intended for illustrative as well as comparative purposes.

According to an embodiment, a battery pack is provided, the battery pack including a cell stack, a pack housing and at least one stack holder. The cell stack includes a plurality of battery cells, wherein the terminals of the battery cells are aligned to a top side of the cell stack. The pack housing includes a mounting space for the cell stack, the mounting space including a floor, a pair of opposing first side walls, and a pair of opposing second side walls. The cell stack is arranged in the mounting space in such a way, that its narrow sides are adjacent to the first side walls, the top side of the cell stack extends above the first side walls of the mounting space, and the terminals of the battery cells face in a direction away from the floor. The at least one stack holder is fixed to the first side walls, extends along the top side of the cell stack, and is made of a textile material. The stack holder is further tensioned such as to press the cell stack against the floor.

### Brief Description of the Drawings

Features will become apparent to those of ordinary skill in the art by describing in detail exemplary embodiments with reference to the attached drawings in which:
FIG. 1 is a perspective view on an example for the incorporation of a battery pack in an electric vehicle.
FIG. 2 is a schematic top view of a battery pack according to another embodiment.
FIG. 3 is a schematic sectional side view of a battery pack according to an embodiment.
FIG. 4 is a schematic sectional side view of a snap-fit mechanism according to an embodiment.

### Detailed Description of the Invention

Reference will now be made in detail to embodiments, examples of which are illustrated in the accompanying drawings. The effects and features of the exemplary embodiments, along with their implementation methods, will be described with reference to the accompanying drawings. In the drawings, like reference numerals denote like elements, and redundant descriptions are omitted. The present disclosure, however, may be embodied in various different forms and should not be construed as being limited to the illustrated embodiments. Rather, these embodiments are provided as examples to ensure that the disclosure is thorough and complete, fully conveying the embodiments and features of the present disclosure to those skilled in the art.

Accordingly, processes, elements, and techniques that are not considered essential for a complete understanding of the aspects and features of the present disclosure by those skilled in the art may not be described.

As used herein, the term "and/or" includes all combinations of one or more of the associated listed items. Expressions such as "at least one of", when preceding a list of elements, modify the entire list of elements and not the individual elements within the list. Further, the use of "may" when describing embodiments of the present disclosure refers to "one or more embodiments of the present disclosure." In the following description of embodiments of the present disclosure, a singular form of a term may include plural form unless the context clearly indicates otherwise.

It will be understood that although the terms "first" and "second" are used to describe various elements, these elements should not be limited by these terms. These terms are merely used to distinguish one element from another. For example, a 'first' element may be referred to as a 'second' element, and vice versa, without altering the scope of the present disclosure.

It will be further understood that the terms "include," "comprise," "including," or "comprising" specify a property, a region, a number, a step, a process, an element, a component, or a combination thereof, but do not exclude other properties, regions, numbers, steps, processes, elements, components, or combinations thereof.

The terms "essentially forming" and "consisting essentially of" mean that specific additional components may be present, provided that they do not materially affect the essential characteristics of a composition.

It will also be understood that when a film, a region, or an element is referred to as being "above" or "on" another film, region, or element, it may be directly on the another film, region, or element, or there may be intervening films, regions, or elements.

Herein, the terms 'upper' and 'lower' are defined according to the z-axis. For example, the upper cover is positioned at the upper part of the z-axis, while the lower cover is positioned at the lower part thereof. In the drawings, the sizes of elements, layers, and regions may be exaggerated for clarity. Specifically, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (for example an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, for example on a PCB or another kind of circuit carrier. The conducting elements may include metallization, for example surface metallizations and/or pins, and/or may include conductive polymers or ceramics. Further electrical energy might be transmitted via wireless connections, for example using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein shall have the same meanings commonly understood by one of ordinary skill in the relevant art to which the present disclosure belongs. It will be further understood that terms defined in commonly used dictionaries, should be interpreted in a manner consistent with their meaning in the context of the relevant art and/or the present specification, and should not be interpreted in an idealized or overly formal sense, unless expressly so defined herein.

### General Concept

According to one embodiment of the present disclosure, a battery pack is provided. The battery pack includes a cell stack, a pack housing and at least one stack holder. The cell stack includes a plurality of battery cells, and the terminals of the battery cells are aligned to a top side of the cell stack. The pack housing includes a mounting space for the cell stack. The mounting space includes a floor, a pair of opposing first side walls, and a pair of opposing second side walls. The cell stack is arranged in the mounting space in such a way, that its narrow sides are adjacent to the first side walls, the top side of the cell stack extends above the first side walls of the mounting space, and the terminals of the battery cells face in a direction away from the floor. The at least one stack holder is fixed to the first side walls. It extends along the top side of the cell stack, and is made of a textile material. The stack holder is further tensioned such as to press the cell stack against the floor.

Alternatively, the number of cell stacks in the battery pack may be more than one. In such an embodiment, multiple cell stacks may be arranged within the mounting space of the pack housing. Each cell stack may be positioned such that its narrow sides are adjacent to the first side walls, while the top sides of all cell stacks extend above the first side walls. The terminals of the battery cells in each stack face in a direction away from the floor. In this configuration, the at least one stack holder, made of a textile material, may be tensioned to press each cell stack against the floor, either by extending across all cell stacks collectively or by using separate stack holders for each individual stack.

In other words, the disclosure pertains to a cell stack, which consists of multiple battery cells with terminals aligned on a top side of the cell stack. A pack housing of a battery pack provides a mounting space for the cell stack. This mounting space includes a floor, a pair of opposing first side walls, and a pair of opposing second side walls. The cell stack is positioned in the mounting space in such a way, that its narrow sides are adjacent to the first side walls, the top side of the cell stack extends beyond the height of the first side walls, and the terminals face away from the floor. At least one stack holder, which is attached to the first side walls, extends along the top side of the cell stack, and is formed from a textile material. The stack holder is tensioned such that it applies force to press the cell stack against the floor of the mounting space. In this way, the tensioned textile stack holder ensures that the cell stack is securely pressed against the floor, reducing movement during vibrations or impacts. Due to the textile stack holder, a light weight and electrically isolating vertical fixation is realized at low costs.

According to another embodiment, the stack holder is configured to be elastically deformable. Elasticity allows the stack holder to compensate for dimensional variations in the cell stack or housing, ensuring a secure fit without excessive manufacturing precision. The elastic deformability additionally simplifies installation by allowing the stack holder to stretch during placement, reducing assembly time and effort.

In other words, the stack holder designed such that it can temporarily change its shape under a load and return to its original shape once the load is removed. The elastic deformability enhances the functionality of the stack holder in maintaining the position of the cell stack within the pack housing. Elastically deformable refers to the property of a material to undergo reversible deformation under stress, meaning it can temporarily change shape under stress but return to its original shape once the stress is removed.

According to another embodiment, the battery pack further includes a cell contacting unit (CCU) being positioned between the terminals and the stack holder, and being configured to evenly distribute the pressure exerted by the tensioned stack holder over the cell stack. In other words, the battery pack includes a cell contacting unit (CCU) arranged between the terminals of the battery cells and the stack holder. The CCU is designed to evenly distribute the pressure applied by the tensioned stack holder over the cell stack, ensuring uniform force transmission and maintaining reliable contact with the terminals.

In this context, the term CCU refers to a device or assembly used to establish electrical connections with the terminals of individual battery cells within the cell stack. The CCU typically includes elements such as contact tabs, sensing circuitry, or communication interfaces that enable the transfer of electrical power or data. The CCU may facilitate electrical connections between high-voltage components.

According to another embodiment, the stack holder is fixed to the first side walls via a ratchet mechanism, the ratchet mechanism being located at the interface between the stack holder and the first side walls, and the ratchet mechanism is configured to allow adjustment of the tension of the stack holder by incrementally tightening or loosening the stack holder. In this way, the ratchet mechanism allows fine-tuned adjustment of the stack holder's tension, ensuring optimal pressure on the cell stack without excessive force that could damage the battery cells. In other words, the battery pack includes a stack holder fixed to the first side walls of the pack housing via a ratchet mechanism. The ratchet mechanism is positioned at the interface between the stack holder and the first side walls. It is designed to enable tension adjustment of the stack holder by incrementally increasing or decreasing the force exerted on the cell stack.

A ratchet mechanism is a mechanical system consisting of a toothed wheel or strip and a locking element that allows movement in one direction while preventing it in the opposite direction. The looking element may for example be a pawl but is not limited hereto.

The ratchet mechanism may be located where the stack holder connects to or is anchored to the first side walls. This interface serves as the point of attachment and adjustment, ensuring that the stack holder is secured while allowing tension to be modified incrementally. The mechanism may be oriented in such a way that it is accessible from the exterior of the pack housing. The toothed component may for example be incorporated into the stack holder and the locking element may be positioned at the first side walls of the mounting space.

According to another embodiment of the disclosure, the stack holder includes first and second engagement elements positioned at a first end of the stack holder; as well as second engagement elements positioned at an opposing second end of the stack holder. In this embodiment, the mounting space includes third engagement elements and fourth engagement elements positioned at the first side walls. In other words, the battery pack includes a stack holder that features first engagement elements at a first end of the stack holder, as well as second engagement elements at an opposing second end of the stack holder. The mounting space in the pack housing includes third engagement elements and fourth engagement elements positioned at the first side walls, wherein these engagement elements are configured to interact with the corresponding engagement elements of the stack holder to secure it within the mounting space.

In this context, engagement elements are structures or features designed to facilitate the connection between the stack holder and the mounting space. These may include hooks, latches, grooves, clips, or other mechanical interfaces. The engagement elements provide a robust and reliable means of securing the stack holder to the mounting space, ensuring the stack holder remains firmly in place during operation.

According to another embodiment of the disclosure, the first engagement elements and the second engagement elements are configured as openings. In other words, the battery pack includes a stack holder with first engagement elements and second engagement elements that are designed as openings. These openings are positioned at the first and second ends of the stack holder and are configured to interact with corresponding engagement elements on the first side walls of the mounting space, enabling secure attachment of the stack holder within the pack housing.

The openings may be perforations, holes, or slots located in the stack holder, serving as points of connection or interaction with complementary features such as hooks, pins, or latches on the first side walls. Configuring the engagement elements as openings reduces the complexity of the stack holder design, allowing for cost-effective and straightforward manufacturing processes.

According to another embodiment of the disclosure, the third engagement elements are configured as screws configured to screw into the first side walls. In other words, the third engagement elements are designed as screws that are capable of being threaded into the first side walls of the mounting space. These screws serve as the attachment points for securing the stack holder by engaging with the corresponding first and second engagement elements, such as openings, at the ends of the stack holder.

According to another embodiment of the disclosure, the first and second engagement elements include a protruding edge and the third engagement elements are configured to be a snap-in area, wherein the protruding edge is adapted to engage with the snap-in area. In other words, the battery pack includes a stack holder with first and second engagement elements, each including a protruding edge. The first side walls of the mounting space include third engagement elements configured as a snap-in area, wherein the protruding edge of the stack holder is designed to engage with the snap-in area, securing the stack holder in place through a form-fit connection.

In this context, a protruding edge is a raised or extended portion on the stack holder, such as a flange or lip, that serves as an engagement feature to interact with the snap-in area.

A snap-in area is a recessed or contoured region on the first side walls of the mounting space, designed to accommodate and securely hold the protruding edge of the stack holder. The snap-in area allows for a mechanical interlock when the stack holder is pressed into place.

A form-fit connection is a type of mechanical connection achieved through complementary shapes that lock together without additional fasteners.

The snap-in connection simplifies assembly by eliminating the need for screws or additional fasteners, reducing assembly time and effort.

According to another embodiment of the disclosure, the stack holder is made from aramid. Aramid is a synthetic polymer material belonging to the family of aromatic polyamides, characterized by high tensile strength, excellent thermal resistance, and lightweight properties.

The stack holder may alternatively be manufactured from other suitable materials that provide the necessary mechanical strength, thermal resistance, and durability for securely stabilizing the cell stack within the battery pack. Such materials may include reinforced polymers, composite materials, aluminum alloys, or stainless steel, but are not limited hereto.

According to another embodiment of the disclosure, the floor is configured to be a cooling plate. In other words, the floor of the mounting space in the battery pack is designed to function as a cooling plate. This means the floor serves as both a structural support for the cell stack and a heat-dissipating element to regulate the temperature of the battery cells during operation. This configuration ensures the floor of the mounting space not only supports the mechanical stability of the cell stack but also the thermal management, contributing to the reliability, safety, and efficiency of the battery pack.

### Specific Embodiments

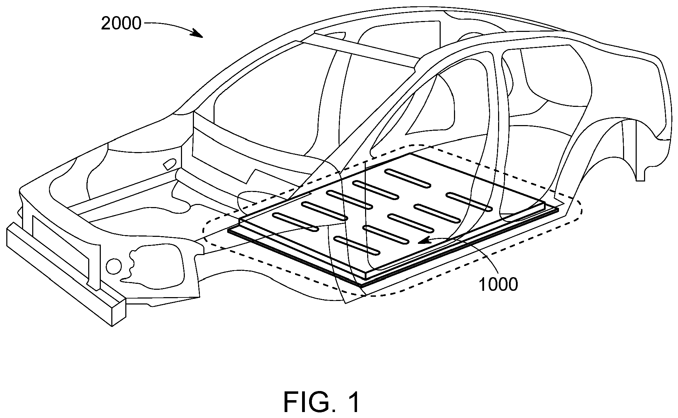

FIG. 1 illustrates a perspective view on an example for the incorporation of a battery pack 1000 in an electric vehicle 2000. The battery pack 1000 is incorporated into the floor of the vehicle 2000.

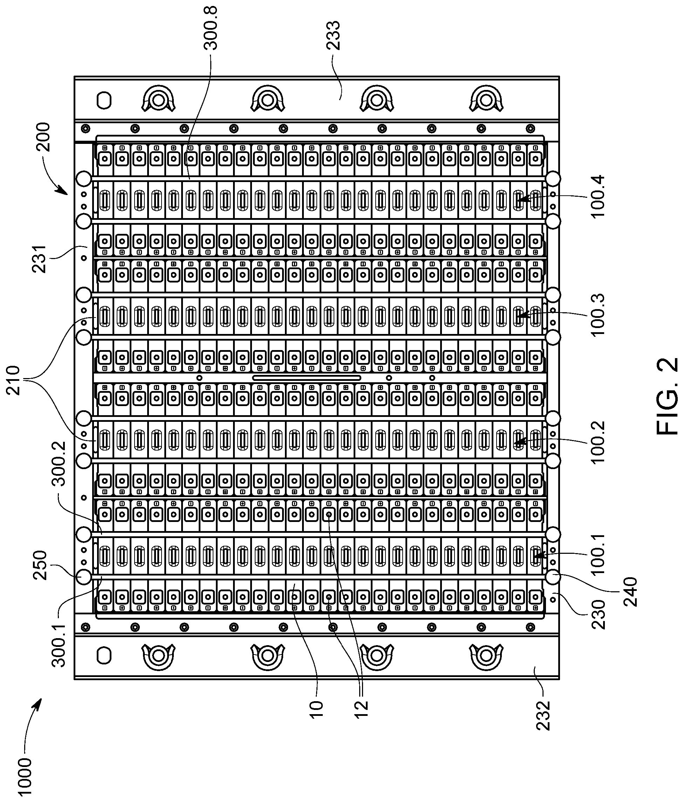

FIG. 2 is a schematic top view of a battery pack 1000 according to another embodiment. The shown battery pack 1000 includes four cell stacks 100.1-100.4. Each cell stack 100.1-100.4 includes multiple prismatic battery cells 10 stacked together and each battery cell 10 includes two terminals 12. The cell stacks 100.1-100.4 are placed inside of the mounting space 210 of the pack housing 200. The pack housing 200 includes two opposing first side walls 230, 231 and the narrow side of each cell stack 100.1-100.4 is placed inside the pack housing 200 such that its narrow side is adjacent to the first side walls 230, 231. The pack housing 200 further includes second side walls 232, 233. Each battery stack 100.1-100.4 is vertically fixated by stack holders 300.1-300.8. The stack holders 300.1-300.8 are fixed to the first side walls 230, 231 and extend over the top side of the battery cells 10 of the battery stacks 100.1-100.4, pressing the cell stacks 100.1-100.4 against a floor 220 (not shown) of the pack housing 200.

It should be noted that the number of cell stacks 100.1-100.4, prismatic battery cells 10, stack holders 300.1-300.8, or other components is not strictly limited to the quantities illustrated in FIG. 2. More than or fewer than four cell stacks 100.1-100.4 may be included in the battery pack 1000. Similarly, more than or fewer than eight stack holders 300.1-300.8 could be utilized to secure the cell stacks 100.1-100.4. The number of prismatic battery cells 10 in each cell stack 100.1-100.4 can also vary.

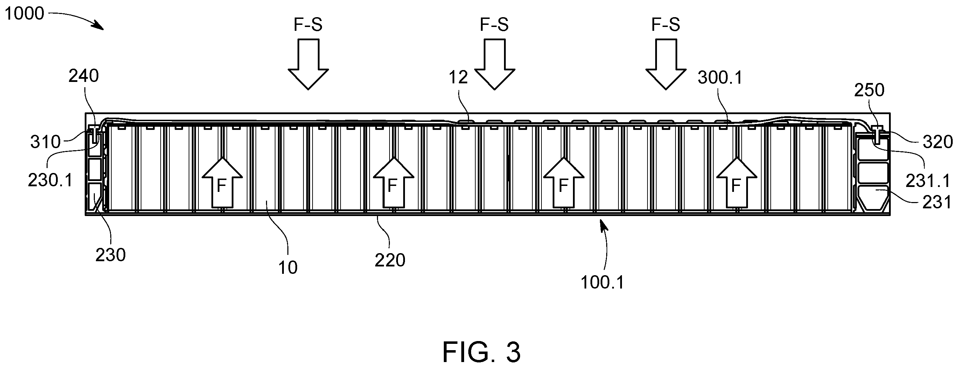

FIG. 3 illustrates a schematic sectional side view of a battery pack 1000 according to an embodiment. The prismatic battery cells 10 of the cell stack 100.1 are stacked together and positioned between the first side walls 230, 231. The battery cells 10 are positioned on the floor 220 of the pack housing 200 and are oriented such that the terminals 12 of the battery cells 10 are facing away from the floor 220 and toward a top side of the battery pack 1000. The top side of the cell stack 100.1 extends beyond the first side walls 230, 231. A stack holder 300.1 is fixed to the first side walls 230, 231 with a third engagement element 240 and fourth engagement element 250. In this case, the third engagement element 240 and the fourth engagement element 250 are screws, screwed into the first side walls 230, 231. Accordingly, the stack holder 300.1 includes a first engagement element 310 and a second engagement element 320 which are openings. The third engagement element 240 and the fourth engagement element 250 fix the stack holder 300.1 to the first side walls 230, 231. The screws pass through the first engagement element 310 and second engagement element 320, that means the openings, of the stack holder 300.1 and thread into the first side walls 230 and 231, thereby securing the stack holder 300.1 in place. The stack holder 300.1 extends above the cell stack 100.1 and presses the cell stack 100.1 against the floor 220, preventing vertical movement of the cell stack 100.1. The first side walls 230, 231 may include a fifth engagement element 230.1 and a sixth engagement element 231.1 formed by opening a portion of the upper surface so that a third engagement element 240 and a fourth engagement element 250 can be inserted and fixed. The third engagement element 240 and the fourth engagement element 250 are inserted into the first engagement element 310 and the second engagement element 320 of the stack holder 300.1, and are inserted into the fifth engagement element 230.1 and the sixth engagement element 231.1 of the first side wall 230, 231 to prevent movement of the stack holder 300.1 with respect to the first side wall 230, 231.

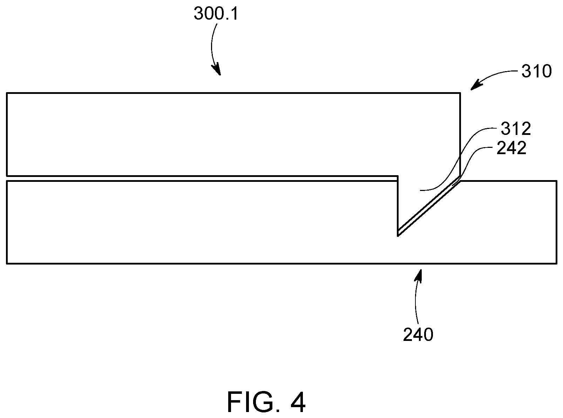

FIG. 4 illustrates a schematic sectional side view of a snap-fit mechanism according to an embodiment. Shown is part of a first engagement element 310 of a stack holder 300.1 and of the fourth engagement element 240 of a first side wall 230. The first engagement element 310 includes a protruding edge 312 of a snap-fit connection. The fourth engagement element 240 includes a snap-in area 242. The protruding edge 312 is designed snap into the snap-in area 242 when fixing the stack holder 300.1 to the first side wall 230. The snap-fit connection is designed to prevent unintended horizontal movement of the stack holder 300.1 relative to the pack housing 200. Other snap-fit designs may be used.

### Reference signs

- 10: Battery cell
- 12: Terminal
- 100.1-100.4: Cell stack
- 200: Pack housing
- 210: Mounting space
- 220: Floor
- 230, 231: First side walls
- 232, 233: Second side walls
- 240: Third engagement element
- 242: Snap-in area
- 250: Fourth engagement element
- 300.1-300.8: Stack holder
- 310: First engagement element
- 312: Protruding edge
- 320: Second engagement element
- 400: Cell contacting unit (CCU)
- 1000: Battery pack
- 2000: Electric vehicle
- 230.1: Fifth engagement element
- 231.1: Sixth engagement element

## Claims

1. A battery pack (1000) comprising:
- a cell stack (100.1-100.4) comprising a plurality of battery cells (10), wherein the terminals (12) of the battery cells (10) are aligned to a top side of the cell stack (100.1-100.4);
- a pack housing (200) comprising a mounting space (210) for the cell stack (100.1-100.4), the mounting space (210) comprising a floor (220), a pair of opposing first side walls (230, 231), and a pair of opposing second side walls (232, 233), wherein the cell stack (100.1-100.4) is arranged in the mounting space (210) in such a way that its narrow sides are adjacent to the first side walls (230, 231), the top side of the cell stack (100.1-100.4) extends above the first side walls (230, 231) of the mounting space (210), and the terminals (12) of the battery cells (10) face in a direction away from the floor (220); and
- at least one stack holder (300.1-300.8) being fixed to the first side walls (230, 231) and extending along the top side of the cell stack (100.1-100.4), wherein the stack holder (300.1-300.8) is made of a textile material and is tensioned such as to press the cell stack (100.1-100.4) against the floor (220).

2. The battery pack (1000) as claimed in claim 1, wherein the stack holder (300.1-300.8) is configured to be elastically deformable.

3. The battery pack (1000) as claimed in any one of claims 1 or 2, wherein the battery pack (1000) further comprises a cell contacting unit, CCU, being positioned between the terminals (12) and the stack holder (300.1-300.8), and being configured to evenly distribute the pressure exerted by the tensioned stack holder (300.1-300.8) over the cell stack (100.1-100.4).

4. The battery pack (1000) as claimed in any one of the preceding claims, wherein the stack holder (300.1-300.8) is fixed to the first side walls (230, 231) via a ratchet mechanism, the ratchet mechanism being located at the interface between the stack holder (300.1-300.8) and the first side walls (230, 231), and wherein the ratchet mechanism is configured to allow adjustment of the tension of the stack holder (300.1-300.8) by incrementally tightening or loosening the stack holder (300.1-300.8).

5. The battery pack (1000) as claimed in any one of the proceeding claims, wherein the stack holder (300.1-300.8) comprises
- first engagement elements (310) positioned at a first end of the stack holder (300.1-300.8); and
- second engagement elements (320) positioned at an opposing second end of the stack holder (300.1-300.8); and
wherein the mounting space comprises third engagement elements (240) and fourth engagement elements (250) positioned at the first side walls (230, 231).

6. The battery pack (1000) as claimed in claim 5, wherein the first engagement elements (310) and the second engagement elements (320) are configured as openings.

7. The battery pack (1000) as claimed in claim 5 or 6, wherein the third and fourth engagement elements (240, 250) are configured as screws configured to screw into the first side walls (230, 231).

8. The battery pack (1000) as claimed in any of the claims 1 through 4, wherein the first engagement element (310) and the second engagement element (320) comprise a protruding edge (312) and the third engagement element (240) and the fourth engagement element (250) are configured to be a snap-in area (242), wherein the protruding edge (312) is adapted to engage with the snap-in area (242).

9. The battery pack (1000) as claimed in any one of the proceeding claims, wherein the stack holder (300.1-300.8) is made from aramid.

10. The battery pack (1000) as claimed in any one of the proceeding claims, wherein the floor (220) is configured to be a cooling plate.
